(19) Europäisches Patentamt / European Patent Office / Office européen des brevets

(11) **EP 3 158 018 B1**

(12) **FASCICULE DE BREVET EUROPEEN**

(45) Date de publication et mention
de la délivrance du brevet:
**18.11.2020   Bulletin 2020/47**

(21) Numéro de dépôt: **15733828.6**

(22) Date de dépôt: **12.06.2015**

(51) Int Cl.:
*C09D 5/24* (2006.01)       *C09D 5/02* (2006.01)
*C09D 179/08* (2006.01)     *C09D 171/00* (2006.01)
*C09D 181/04* (2006.01)     *C09D 181/06* (2006.01)
*B05D 5/08* (2006.01)       *C09D 127/02* (2006.01)
*A47J 36/02* (2006.01)      *C09D 127/12* (2006.01)

(86) Numéro de dépôt international:
**PCT/FR2015/051570**

(87) Numéro de publication internationale:
**WO 2015/193593 (23.12.2015 Gazette 2015/51)**

(54) **COMPOSITIONS AQUEUSES DE SEMI-FINI ET DE PRIMAIRE DE REVÊTEMENT ANTIADHÉSIF COMPRENANT DES POLYMÈRES HÉTÉROCYCLIQUES**

WÄSSRIGE HALBFERTIGE UND PRIMÄRE ANTIHAFTBESCHICHTUNGSZUSAMMENSETZUNGEN MIT HETEROCYCLISCHEN POLYMEREN

AQUEOUS SEMI-FINISHED AND PRIMARY NON-STICK COATING COMPOSITIONS COMPRISING HETEROCYCLIC POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.06.2014   FR 1455723**
            **30.12.2014   FR 1463460**

(43) Date de publication de la demande:
**26.04.2017   Bulletin 2017/17**

(73) Titulaire: **SEB S.A.**
**69130 Ecully (FR)**

(72) Inventeurs:
 • **GANTILLON, Barbara**
   **F-74320 Leschaux (FR)**
 • **VOISIN, Laurent**
   **F-74150 Sales (FR)**
 • **JOUTANG, Isabelle**
   **F-73290 La Motte Servolex (FR)**

 • **PERILLON, Jean-Luc**
   **F-26130 Saint Paul Trois Chateaux (FR)**

(74) Mandataire: **SEB Developpement Brevets SEB Developpement**
**Direction de la propriété industrielle - Brevets**
**Campus SEB - CS 90229**
**112, chemin du Moulin Carron**
**69134 Ecully Cedex (FR)**

(56) Documents cités:
**EP-A1- 1 103 582     GB-A- 1 592 886**

 • **DATABASE WPI Week 200972 Thomson Scientific, London, GB; AN 2009-Q20343 XP002739357, -& JP 2009 242711 A (DAIKIN KOGYO KK) 22 octobre 2009 (2009-10-22)**
 • **DATABASE WPI Week 201023 Thomson Scientific, London, GB; AN 2010-D19953 XP002739358, -& CN 101 665 646 A (SHANGHAI ZHUOHONG POLYMERIC MATERIAL TECHNOLOGY CO LTD) 10 mars 2010 (2010-03-10)**

**EP 3 158 018 B1**

**Description**

La présente invention concerne de manière générale des compositions aqueuses pour revêtement (ou compositions de semi-fini ou semi-finis) ainsi que des compositions aqueuses de revêtement antiadhésif (ou compositions de primaire ou primaires) comprenant de telles compositions pour revêtement. Les revêtements antiadhésifs obtenus à partir des compositions pour revêtement et des compositions de revêtement antiadhésif selon la présente invention présentent une résistance améliorée à la corrosion et à l'abrasion, ainsi qu'un jaunissement réduit.

Par composition aqueuse, on entend, au sens de la présente invention, toute composition comprenant en majorité de l'eau, c.à.d. au moins 50 % d'eau en poids par rapport au poids total de ladite composition.

L'invention appartient au domaine de la formulation de semi-finis et de primaires de revêtement antiadhésif destinés à être appliqués sur des articles chauffants, et plus particulièrement des articles culinaires ou électroménagers, ainsi qu'au domaine de tels revêtements antiadhésifs.

A titre d'exemples d'articles culinaires utilisables dans le cadre de la présente invention, on peut notamment citer les poêles, les sauteuses, les casseroles, les woks, les crêpières, les fait-tout, les marmites, les cocottes, les rôtissoires à œufs et les poêles grill.

A titre d'exemples d'articles électroménagers utilisables dans le cadre de la présente invention, on peut notamment citer les cuves de friteuse, les poêlons ou caquelons pour fondue ou raclette, et les semelles de fer à repasser.

Il est notamment connu de l'homme de l'art que les articles culinaires doivent répondre à des critères de performances quant à leur antiadhésivité, leur résistance à la rayure et, plus généralement, leur résistance aux multiples agressions auxquelles ils sont soumis en usage.

Les revêtements à base de polymères fluorés sont ceux qui apportent le meilleur compromis pour l'ensemble de ces propriétés. Il subsiste toutefois une difficulté pour l'adhérence de ces revêtements sur le support de l'article et de très nombreuses solutions ont été proposées.

Une part importante des formulations destinées à promouvoir l'adhésion du polytétrafluoroéthylène (PTFE) est réalisée en utilisant une co-résine d'adhésion. Parmi les résines les plus utilisées, on retrouve les polymères hétérocycliques, tels que les polyamide-imides (PAI) et les polyimides (PI). Pour une utilisation en combinaison avec les dispersions colloïdales de PTFE, ces co-résines d'adhésion doivent nécessairement être préalablement mises en phase aqueuse généralement selon deux modes.

Par polymère hétérocyclique, on entend, au sens de la présente invention, tout polymère présentant au moins un motif monomère comprenant au moins un hétérocycle. Par hétérocycle, on entend, au sens de la présente invention, tout cycle ayant en tant qu'atomes membres du cycle au moins deux éléments différents.

Pour le premier mode, le produit de départ est une résine de polymère hétérocyclique en solution dans un solvant aprotique polaire, tel que la N-éthylpyrrolidone (NEP) ou la N-méthylpyrrolidone (NMP). Ensuite, une salification des groupements acides est réalisée par ajout d'amines primaires ou secondaires très basiques, puis de l'eau est introduite dans le mélange pour procéder à l'inversion de phase du mélange.

Il est à noter que la plupart des solvants aprotiques polaires sont soumis à un étiquetage en tant que produit nocif, voire même toxique, dans la réglementation REACH (Règlement du Parlement européen et du Conseil concernant l'enregistrement, l'évaluation et l'autorisation des substances chimiques, ainsi que les restrictions applicables à ces substances). De ce fait, l'impact sur l'environnement et la santé engendré par une telle utilisation est non négligeable.

Par solvant toxique ou nocif, on entend, au sens de la présente invention, un solvant contenant des substances cancérogènes, mutagènes ou reprotoxiques de catégorie 1A et 1B et sur lequel des pictogrammes de dangerosité doivent être apposés pour informer les utilisateurs des risques et dangers associés à ce type de produit (tel que défini par le Règlement CE N° 1272/2008 du Parlement Européen et du Conseil du 16 septembre 2008 et de ses adaptations au progrès scientifique et technique).

Pour le deuxième mode, le produit de départ est une résine de polymère hétérocyclique en poudre hydro-émulsifiable, sur laquelle sont ajoutées une ou plusieurs amines pour salifier les groupes acides du polymère hétérocyclique et créer une émulsion dans de l'eau chaude.

D'un point de vue fonctionnel, le premier mode utilisant des résines de polymère hétérocyclique en solution dans un solvant aprotique polaire est plus facile à mettre en œuvre.

Cependant, l'utilisation d'amines de salification entraîne l'ouverture des cycles imides du polymère hétérocyclique et, de ce fait, la filmification est souvent moins bonne qu'espérée et l'adhérence et/ou la tenue à la corrosion du revêtement obtenu s'en trouvent affaiblies. Enfin, l'utilisation d'amines de salification, quel que soit leur type, accentue le jaunissement lors de l'élaboration du revêtement.

EP1103582 A1 divulgue une composition aqueuse pour revêtement exempte d'amines comprenant : une polyamide-imide et/ou polyimide ayant une granulométrie moyenne de 0.5-8 $\mu$m ; une polyéther-sulfone ; une résine fluorocarbonée.

Pour pallier aux inconvénients de l'art antérieur, la demanderesse a mis au point des compositions aqueuses de semi-fini et de primaire permettant d'obtenir des revêtements résistant à de hautes températures et à l'abrasion, et présentant un jaunissement superficiel réduit, voire inexistant.

Plus particulièrement, la présente invention a pour objet une composition aqueuse pour revêtement (ou composition de semi-fini) exempte d'amines, et comprenant au moins un polymère hétérocyclique, caractérisée en ce que le polymère hétérocyclique se présente sous forme de poudre ayant un d90 inférieur ou égal à 20 pm et est sélectionné dans le groupe des polyamide-acide amiques.

Une telle granulométrie permet d'obtenir des revêtements de faibles épaisseurs résistants à l'abrasion. De plus, cette granulométrie permet d'atténuer l'effet de sédimentation dans la composition de semi-fini.

Par d90, on entend, au sens de la présente invention, la dimension telle que 90 % en volume de la population est constitué de particules de taille inférieure à ladite dimension.

Avantageusement, le ou les polymères hétérocycliques se présentent sous forme de poudre ayant en outre un d50 inférieur ou égal à 10 $\mu$m.

Par d50, on entend, au sens de la présente invention, la dimension telle que 50 % en volume de la population est constitué de particules de taille inférieure à ladite dimension (médiane de la répartition particulaire).

Avantageusement, le ou les polymères hétérocycliques se présentent sous forme de poudre ayant un d50 minimum de l'ordre de 3 $\mu$m et un d90 minimum de 10 $\mu$m.

Selon la présente invention, la composition de semi-fini est exempte d'amines.

Par amine, on entend, au sens de la présente invention, tout composé azoté qui dérive formellement de l'ammoniac $NH_3$ par remplacement d'un ou plusieurs atomes d'hydrogène par des groupes carbonés, tel que les amines primaires, les amines secondaires, les amines tertiaires, les amines hétérocycliques, les diamines aliphatiques, les oligoamines aliphatiques, les étheramines, les éthanolamines, les isopropanolamines et les alkyls aminoalcool.

Avantageusement, la composition de semi-fini selon l'invention comprend au plus 15 % en poids de solvant par rapport au poids total de la composition de semi-fini.

Le solvant utilisé dans la composition de semi-fini selon la présente invention peut avantageusement être aprotique polaire. Le solvant peut de préférence comprendre l'un au moins de la N-formylmorpholine (NFM), du diméthylsulfoxyde (DMSO), de la N-acétylmorpholine (NAM), de la N-éthylpyrrolidone (NEP) et de la N-méthylpyrrolidone (NMP).

En vue de l'obtention de compositions de primaire non étiquetées (c'est-à-dire non toxiques), il est nécessaire que la concentration en solvant aprotique polaire toxique, dit étiqueté, soit la plus faible possible, voire même qu'elle soit nulle. Une source de ce type de solvant provient d'une teneur résiduelle présente dans la poudre de polymère hétérocyclique. De plus, le fait de n'incorporer dans la composition de semi-fini qu'une faible quantité d'un tel solvant limite le jaunissement du revêtement. Outre le jaunissement, une teneur élevée en ces solvants aprotiques polaires toxiques est inutilement couteuse.

Par conséquent, la composition de semi-fini selon l'invention comprend avantageusement au plus 2 % en poids, et de préférence au plus 0,3 % en poids, de solvant aprotique polaire toxique par rapport au poids total de la composition de semi-fini.

Avantageusement, le solvant aprotique polaire est non toxique.

Le ou les polymères hétérocycliques peuvent avantageusement posséder chacun un indice d'acide compris entre 1 et 200 mg de KOH/g.

Avantageusement, ce ou ces polymères hétérocycliques sont sélectionnés dans le groupe comprenant les polyimides (PI), les polyamide-imides (PAI), les polyétherimides (PEI), les polyamide-acides amiques et leurs mélanges. Ces polymères présentent une tenue thermique élevée et une bonne dureté que l'on peut associer aux motifs aromatiques de leur structure.

Par exemple, la composition de semi-fini selon l'invention peut comprendre un mélange de polyamide-imide et de polyamide-acide amique.

Avantageusement, le degré de polymérisation du ou des polymères hétérocycliques précités est supérieur ou égal à 5. Par degré de polymérisation d'un polymère, on entend, au sens de la présente invention, le nombre de répétitions du ou des motifs de base dans ce polymère.

Selon un mode de réalisation de la présente invention, la composition pour revêtement telle décrite ci-dessus peut comprendre en outre au moins un polymère aromatique dont l'indice d'acide est strictement inférieur à 1 mg de KOH/g, et de préférence égal à 0 mg de KOH/g, et qui se présente sous forme de poudre ayant un $d_{90}$ inférieur ou égal à 20 $\mu$m, la teneur relative en poids du polymère hétérocyclique par rapport au polymère aromatique dans la composition pour revêtement étant supérieure à 50:50 et inférieure à 100:0.

Avantageusement, la combinaison d'un tel polymère aromatique au polymère hétérocyclique décrit ci-dessus permet de limiter davantage le jaunissement des revêtements obtenus.

Par polymère aromatique, on entend, au sens de la présente invention, tout polymère présentant au moins un motif monomère comprenant au moins un système cyclique respectant la règle d'aromaticité d'Hückel.

Avantageusement, ce ou ces polymères aromatiques sont sélectionnés dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK), ainsi que les dérivés et mélanges de ceux-ci.

Avantageusement, le degré de polymérisation du ou des polymères aromatiques précités est supérieur ou égal à 5.

La présente invention a également pour objet une composition aqueuse de revêtement antiadhésif (ou composition aqueuse de primaire) exempte d'amine, qui comprend :

- une composition aqueuse pour revêtement telle que définie précédemment, et
- au moins une résine fluorocarbonée.

De préférence, la composition de primaire selon l'invention comprend entre 2 à 20 % en poids, et de préférence entre 8 et 15 % en poids, de solvant par rapport au poids total de ladite composition aqueuse de primaire.

Avantageusement, le solvant utilisé dans la composition aqueuse de primaire est aprotique polaire. Le solvant peut de préférence comprendre l'un au moins de la N-formylmorpholine (NFM), du diméthylsulfoxyde (DMSO), de la N-acétylmorpholine (NAM), de la N-éthylpyrrolidone (NEP) et de la N-méthylpyrrolidone (NMP).

La composition de primaire selon l'invention comprend avantageusement au plus 1 % en poids, et de préférence au plus 0,3 % en poids, de solvant aprotique polaire toxique par rapport au poids total de la composition aqueuse de primaire.

Avantageusement, le solvant aprotique polaire est non toxique. Le solvant aprotique polaire peut de préférence comprendre l'un au moins de la N-formylmorpholine (NFM), du diméthylsulfoxyde (DMSO). Le fait d'incorporer un solvant aprotique polaire non toxique dans la composition permet d'obtenir une composition de primaire non étiquetée (en d'autres termes non toxique).

Ainsi, les risques et dangers liés à l'environnement et à la santé d'autrui sont limités. En outre, l'utilisation des formulations non toxiques est considérablement facilitée car ces formulations peuvent être mises en œuvre avec seulement un minimum de précautions.

Avantageusement, la ou les résines fluorocarbonées sont choisies dans le groupe comprenant le polytétrafluoroéthylène (PTFE), les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

De manière avantageuse, la résine fluorocarbonée est le polytétrafluoroéthylène (PTFE), ou un mélange de PTFE et de PFA (PTFE/PFA), ou un mélange de PTFE et de FEP (PTFE/FEP).

Avantageusement, la résine fluorocarbonée représente 1 à 99 % en poids, et de préférence 30 à 80 % en poids, du poids total sec de la composition de primaire.

Dans le cas où la composition de primaire ne comprend pas de polymère aromatique tel que précité, la teneur relative en poids du polymère hétérocyclique par rapport à la résine fluorocarbonée est comprise entre 20:80 et 25:75.

Dans le cas où la composition de primaire comprend au moins un polymère aromatique tel que précité, la teneur totale relative en poids du polymère hétérocyclique et du polymère aromatique par rapport à la résine fluorocarbonée est comprise entre 20:80 et 25:75.

Avantageusement, la composition de primaire selon l'invention comprend en outre au moins une charge.

Avantageusement, la charge représente moins de 40 % en poids, et de préférence de 3 à 20 % en poids, du poids total sec de la composition de primaire.

Avantageusement, la charge comprend des nanoparticules de silice et/ou des nanoparticules d'alumine et/ou des nanoparticules de carbure silicium.

La présente invention a également pour objet un procédé de préparation d'une composition aqueuse pour revêtement telle que définie précédemment comprenant les étapes suivantes :

a) la fourniture d'au moins un polymère hétérocyclique sous forme de poudre ;
b) la préparation d'un mélange comprenant de l'eau et la poudre de l'étape a), et
c) le broyage du mélange issu de l'étape b) pour obtenir un mélange broyé comprenant le polymère hétérocyclique sous forme de poudre ayant un d90 inférieur ou égal à 20 μm.

Avantageusement, dans ce procédé de préparation d'une composition de semi-fini selon l'invention, du solvant est ajouté :

- lors de la préparation de l'étape b), et/ou
- au mélange broyé issu de l'étape c),

la teneur totale en solvant dans la composition pour revêtement étant d'au plus 15 % en poids par rapport au poids total de ladite composition pour revêtement.

Selon un mode de réalisation du procédé de préparation d'une composition de semi-fini selon l'invention, le procédé comprend en outre une étape a') de fourniture d'au moins un polymère aromatique dont l'indice d'acide est égal à 0 mg de KOH/g et qui se présente sous forme de poudre, et dans lequel :

- le mélange issu de l'étape b) comprend en outre la poudre de l'étape a'), et
- le broyage de l'étape c) permet d'obtenir un mélange broyé comprenant le polymère hétérocyclique et ledit polymère aromatique sous forme de poudre ayant un d90 inférieur ou égal à 20 μm, et
- la teneur relative en poids du polymère hétérocyclique par rapport au polymère aromatique dans le mélange broyé issu de l'étape c) est supérieure à 50:50 et inférieure à 100:0.

Avantageusement, dans le procédé de préparation d'une composition de semi-fini selon ce mode de réalisation, du solvant est ajouté :

- lors de la préparation de l'étape b), et/ou
- au mélange broyé issu de l'étape c)

la teneur totale en solvant dans la composition de semi-fini étant d'au plus 15 % en poids par rapport au poids total de ladite composition de semi-fini.

Selon un autre mode de réalisation du procédé de préparation d'une composition de semi-fini selon l'invention, le procédé comprend en outre les étapes suivantes :

 a') la fourniture d'au moins un polymère aromatique dont l'indice d'acide est égal à 0 mg de KOH/g et qui se présente sous forme de poudre,
 b') la préparation d'un mélange comprenant de l'eau et la poudre de l'étape a'),
 c') le broyage du mélange issu de l'étape b') pour obtenir un mélange broyé comprenant ledit polymère aromatique sous forme de poudre ayant un d90 inférieur ou égal à 20 μm, et
 d) le mélange du mélange broyé issu de l'étape c) et du mélange broyé issu de l'étape c'),

la teneur relative en poids du polymère hétérocyclique par rapport au polymère aromatique dans le mélange issu de l'étape d) étant supérieure à 50:50 et inférieure à 100:0.

Avantageusement, dans le procédé de préparation d'une composition de semi-fini selon cet autre mode de réalisation, du solvant est ajouté :

- lors de la préparation de l'étape b), et/ou
- lors de la préparation de l'étape b'), le cas échéant, et/ou
- au mélange broyé issu de l'étape c), et/ou
- au mélange broyé issu de l'étape c'), le cas échéant, et/ou
- au mélange issu de l'étape d), le cas échéant,

la teneur totale en solvant dans la composition de semi-fini étant d'au plus 15 % en poids par rapport au poids total de ladite composition de semi-fini.

La présente invention a également pour objet un procédé de préparation d'une composition aqueuse pour revêtement comprenant au moins un polymère aromatique telle que définie précédemment comprenant les étapes suivantes :

 a) la fourniture d'au moins un polymère hétérocyclique sous forme de poudre,
 a') la fourniture d'au moins un polymère aromatique dont l'indice d'acide est égal à 0 mg de KOH/g et qui se présente sous forme de poudre,
 b) la préparation d'un mélange comprenant de l'eau et la poudre de l'étape a),
 e) le broyage du mélange issu de l'étape b) pour obtenir un mélange broyé comprenant le polymère hétérocyclique,
 f) la préparation d'un mélange comprenant le mélange broyé issu de l'étape e) et la poudre de l'étape a'), et
 g) le broyage du mélange issu de l'étape f) pour obtenir un mélange broyé comprenant le polymère hétérocyclique et ledit polymère aromatique sous forme de poudre ayant un d90 inférieur ou égal à 20 μm,

la teneur relative en poids du polymère hétérocyclique par rapport au polymère aromatique dans le mélange issu de l'étape g) étant supérieure à 50:50 et inférieure à 100:0.

Avantageusement, dans ce procédé de préparation d'une composition de semi-fini comprenant au moins un polymère aromatique, du solvant est ajouté :

- lors de la préparation de l'étape b), et/ou
- au mélange broyé issu de l'étape e), et/ou
- lors de la préparation de l'étape f), et/ou
- au mélange broyé issu de l'étape g), le cas échéant,

la teneur totale en solvant dans la composition de semi-fini étant d'au plus 15 % en poids par rapport au poids total de ladite composition de semi-fini.

La présente invention a également pour objet un autre procédé de préparation d'une composition aqueuse pour revêtement comprenant au moins un polymère aromatique telle que définie précédemment comprenant les étapes suivantes :

a) la fourniture d'au moins un polymère hétérocyclique sous forme de poudre,
a') la fourniture d'au moins un polymère aromatique dont l'indice d'acide est égal à 0 mg de KOH/g et qui se présente sous forme de poudre,
b') la préparation d'un mélange comprenant de l'eau et la poudre de l'étape a'),
e') le broyage du mélange issu de l'étape b') pour obtenir un mélange broyé comprenant le polymère aromatique,
f') la préparation d'un mélange comprenant le mélange broyé issu de l'étape e') et la poudre de l'étape a), et
g') le broyage du mélange issu de l'étape f) pour obtenir un mélange broyé comprenant le polymère hétérocyclique et le polymère aromatique sous forme de poudre ayant un d90 inférieur ou égal à 20 μm,

la teneur relative en poids du polymère hétérocyclique par rapport au polymère aromatique dans le mélange issu de l'étape g') étant supérieure à 50:50 et inférieure à 100:0.

Avantageusement, dans ce procédé de préparation d'une composition de semi-fini comprenant au moins un polymère aromatique, du solvant est ajouté :

- lors de la préparation de l'étape b'), et/ou
- au mélange broyé issu de l'étape e'), et/ou
- lors de la préparation de l'étape f), et/ou
- au mélange broyé issu de l'étape g'), le cas échéant,

la teneur totale en solvant dans la composition de semi-fini étant d'au plus 15 % en poids par rapport au poids total de ladite composition de semi-fini.

Avantageusement, le broyage dans l'un quelconque des procédés de préparation d'une composition de semi-fini selon l'invention est un broyage mécanique à température ambiante ou un broyage ultrasonique.

La présente invention a également pour objet un procédé de préparation d'une composition aqueuse de revêtement antiadhésif telle que définie précédemment comprenant le mélange de la composition aqueuse pour revêtement telle que définie précédemment ou telle que préparée selon l'un quelconque des procédés de préparation d'une composition pour revêtement tel que définis précédemment avec au moins une résine fluorocarbonée.

La ou les résines fluorocarbonées peuvent être sous forme de poudre ou en dispersion aqueuse.

La présente invention a également pour objet un procédé de fabrication d'un article comprenant les étapes suivantes :

i. la fourniture d'un substrat métallique présentant deux faces opposées ;
ii. l'application, sur l'une des faces dudit substrat, d'au moins une couche de composition aqueuse de semi-fini telle définie précédemment ou telle que préparée selon l'un quelconque des procédés de préparation d'une composition pour revêtement tel que définis précédemment ou d'au moins une couche de composition aqueuse de primaire telle définie précédemment ou telle que préparée selon le procédé de préparation d'une composition de revêtement antiadhésif tel que défini précédemment ; puis
iii. la cuisson de l'ensemble à une température comprise entre 300°C et 430°C.

Avantageusement, le procédé de fabrication d'un article selon l'invention, peut en outre comprendre, entre les étapes d'application ii) et de cuisson iii), l'application, sur ladite couche de composition de semi-fini ou de composition de primaire, d'au moins une couche de composition de finition comprenant au moins une résine fluorocarbonée.

La présente invention a encore pour objet un article susceptible d'être obtenu selon le procédé de fabrication d'un article tel que décrit précédemment.

L'article selon l'invention peut être un article culinaire dont l'une des faces constitue une face interne concave destinée à être en contact avec des aliments placés à l'intérieur dudit article et l'autre face est une face externe convexe destinée à être en contact avec une source de chaleur.

L'invention est illustrée plus en détail dans les exemples suivants.

## EXEMPLES

### Produits

#### Supports

- Supports en aluminium lisses simplement dégraissés

#### Compositions aqueuses de semi-fini

- Triéthylamine
- Résines polymères hétérocycliques :

  ◦ polyamide-acide amique sous forme de poudre humide aqueuse à 35,5 % d'extrait sec (ES) et contenant moins de 5 % en poids de N-méthylpyrrolidone (NMP), ayant un grade alimentaire et dont le degré de polymérisation est de l'ordre de 8
  ◦ polyamide-acide amique sous forme de poudre humide aqueuse à 90 % d'extrait sec (ES) et contenant moins de 5 % en poids de N-méthylpyrrolidone (NMP), ayant un grade alimentaire et dont le degré de polymérisation est de l'ordre de 10 à 20
  ◦ résine polyamide-imide (PAI) à 29 % d'extrait sec dans la N-éthylpyrrolidone (NEP), dont le degré de polymérisation est de l'ordre de 10 à 15

- Autres résines polymères :

  ◦ résine polyéthersulfone (PES), grade micronisé, dont le degré de polymérisation est supérieur à 50

- Solvants aprotiques polaires non étiquetés (c'est-à-dire non toxiques au sens de la présente invention) :
  ◦ N-formylmorpholine (NFM)
- Solvants aprotiques polaires étiquetés (c'est-à-dire toxiques au sens de la présente invention) :
  ◦ N-éthylpyrrolidone (NEP)

#### Compositions aqueuses de primaire

- Solvants aprotiques polaires non étiquetés (c'est-à-dire non toxiques au sens de la présente invention) :

  ◦ N-formylmorpholine (NFM)
  ◦ diméthyl sulfoxyde (DMSO)

- Solvants aprotiques polaires étiquetés (c'est-à-dire toxiques au sens de la présente invention) :
  ◦ N-éthylpyrrolidone (NEP)
- Charge : silice colloïdale non modifiée en surface avec une surface spécifique de 220 m$^2$/g environ et qui se présente sous forme de dispersion aqueuse de nanoparticules avec un extrait sec de 30 %
- Dispersion de noir de carbone à 25 % d'extrait sec
- Dispersion de PTFE à 60 % d'extrait sec
- Système tensioactif non-ionique à base d'alkylphénol éthoxylé à 13 % d'extrait sec
- Hydroxyde d'ammonium NH$_4$OH (d=0,9)

**Tests**

Détermination de l'extrait sec d'une composition aqueuse de semi-fini ou de primaire

**PRINCIPE**

L'extrait sec d'un produit est la partie solide résiduelle restant après évaporation des matières volatiles qu'il contient. La température et la durée de séchage jouent un grand rôle car les solvants à point d'ébullition élevé, les fractions de monomères, les diluants réactifs et les sous-produits de réaction (selon leur degré de rétention) quittent très lentement le film en formation. Il est donc très important de définir de façon très conventionnelle des conditions de séchage normalisées, aussi proches que possible de la pratique.

**MODE OPERATOIRE**

Pour mesurer cet extrait sec, on procède de la manière suivante :

- on pèse une coupelle en aluminium : $m_0$ = masse de la coupelle ;
- on dispose entre 0,5 g et 3 g de produit à étudier dans cette coupelle ;
- on pèse la coupelle remplie : $m_1$ = masse de la coupelle remplie ;
- on place la coupelle dans une étuve à 210°C pendant deux heures ;
- après étuvage et après refroidissement, on pèse la coupelle : $m_2$ = masse de la coupelle remplie après étuvage et refroidissement ;
- l'extrait sec est donné par la formule ci-dessous :

$$\text{Extrait sec} = 100*[(m_2-m_0)/(m_1-m_0)]$$

Mesure de la taille et de la distribution de tailles des particules par diffraction de la lumière pour des poudres de taille comprise entre environ 100 nm et environ 5 mm

A la fin du broyage des produits de la présente invention, la poudre broyée est récupérée et sa granulométrie caractérisée à l'aide d'un granulomètre à diffraction laser commercialisé sous la dénomination commerciale Mastersizer de la société Malvern.

Evaluation de l'adhérence d'une couche de semi-fini ou de primaire sur un substrat en aluminium lisse

On effectue un test par quadrillage selon la norme ISO 2409, suivi d'une immersion de l'article revêtu pendant 18 heures (consistant en une alternance de 3 cycles de 3 heures dans de l'eau bouillante et de 3 cycles de 3 heures dans l'huile à 200°C). Puis, on observe si le revêtement antiadhésif présente ou non un décollement.

La cotation est la suivante :

- aucun carré ne doit être décollé pour obtenir une cotation de 100 (adhérence excellente) ;
- en cas de décollement, la valeur relevée est égale à la cotation de 100 diminuée du nombre de carrés décollés.

Evaluation du jaunissement

Le jaunissement après cuisson des plaquettes revêtues est évalué visuellement par comparaison inter-plaquettes.

Principe de fonctionnement du broyeur en jarre (broyage mécanique)

**PRINCIPE**

Le broyage à billes consiste à charger une jarre avec l'échantillon à broyer et des billes dites de broyage et à faire tourner la jarre autour de son axe à une certaine vitesse. La rotation de la jarre s'effectue généralement à l'aide d'une machine à rouleaux. L'échantillon peut être broyé sous forme sèche ou dispersée dans un solvant approprié (par ex. dans l'eau, dans l'alcool ou dans un solvant). La dispersion peut également contenir certains adjuvants (comme un dispersant ou un anti-mousse).

**DEFINITION DES PRINCIPAUX PARAMETRES DE BROYAGE**

- Choix des billes de broyage (volume et diamètre(s))

Le diamètre moyen des billes de broyage doit être adapté à la dimension des particules à broyer. Plus les particules sont fines, plus le diamètre des billes à utiliser sera petit. Le volume total de billes, y compris les vides entre les billes, représentera environ 50-60 % du volume intérieur de la jarre. Les billes de tailles différentes sont avantageusement réparties selon la proportion pondérale suivante par rapport au poids total des billes : 25 % de petites billes, 50 % de billes moyennes et 25 % de grosses billes. La dimension des billes les plus petites est comprise entre 2 et 10 mm. L'alumine et la zircone stabilisée sont couramment utilisées comme matériau des billes.

- Volume de matière dans le broyeur

Afin de limiter l'usure des billes de broyage, la charge à broyer doit recouvrir totalement la charge de billes. En général, elle représentera un volume correspondant à environ 25 % du volume de la jarre.
Si la charge à broyer est une poudre sèche, le volume des billes sera ajusté après quelques minutes de broyage. Le broyage réduisant la taille des particules ainsi que le volume des vides entre particules, il est nécessaire de contrôler périodiquement si le volume de charge à broyer est suffisant pour recouvrir toutes les billes. Si cela n'est plus le cas, il est nécessaire de retirer l'excès de billes afin de limiter au maximum la contamination de la poudre.
La durée du broyage dépend de la nature de la résine polymère à broyer et de la taille de particule finale souhaitée.

Principe de fonctionnement du broyeur Discontimill®

Ce broyage est un broyage mécanique qui consiste à réduire la taille des particules et des grains de différents types de matériaux pendant lequel la suspension des particules et grains est maintenue sous refroidissement.
Les opérations de broyage sont effectuées avec un broyeur planétaire. Celui-ci est constitué d'un disque sur lequel sont fixées deux jarres de broyage d'une contenance de 45mL chacune et pouvant accueillir jusqu'à 7 billes de broyage de 15 mm de diamètre. Les jarres et les billes de broyage sont en oxyde de zirconium, matériau réputé pour sa très grande résistance aux chocs et à l'usure autorisant des broyages de durée prolongée.
Le système de broyage fonctionne en faisant tourner le disque porteur et les jarres autour de leur axe propre. La vitesse de rotation est identique pour le plateau et les jarres, pouvant varier de 100 tr/min à 800 tr/min. En revanche, les sens de rotation sont opposés de façon à générer des forces centrifuges antagonistes.

**EXEMPLE 1** : **Composition aqueuse de semi-fini selon l'invention (SF1)** :

**Préparation d'une composition aqueuse de semi-fini SF1 à base de polymère hétérocyclique et sans amine.**

On réalise une composition aqueuse de semi-fini SF1 comportant les composés suivants, leurs quantités respectives étant indiquées ci-dessous :

| | |
|---|---|
| - Polyamide-acide amique (35,5 % ES) | : 616,0 g |
| - Eau déminéralisée | : 726,3 g |
| - TOTAL | : 1342,3 g |

Pour réaliser la composition aqueuse de semi-fini SF1, on utilise un système de broyage en jarre de 3 litres pour obtenir une pâte constituée d'une suspension stable de particules de polyamide-acide amique dans de l'eau dont la granulométrie finale est importante pour l'enduction par pulvérisation et l'obtention des propriétés d'adhérence du revêtement obtenu.
On procède comme suit :

- on introduit, dans la jarre, la poudre de polyamide-acide amique, dont la granulométrie initiale varie de quelques centaines de microns au mm ; puis
- on ajoute l'eau déminéralisée ;
- on place la jarre à température ambiante avec le mélange ainsi obtenu et les billes sur des rouleaux pendant la durée nécessaire et suffisante pour réduire la taille des particules de polyamide-acide amique.

Le taux de solvant aprotique polaire toxique dans la composition SF1, soit la NMP, est inférieur à 2,3 % en poids par rapport au poids total de la composition.

Les propriétés de la composition aqueuse SF1 ainsi obtenue sont les suivantes :

- extrait sec théorique : 16,3 %
- extrait sec mesuré dans la composition : 16,2 %
- Il s'agit d'une suspension de couleur blanc crème.
- Le pH de cette composition est compris entre 3 et 4.
- Viscosité (en coupe 2,5 selon la norme DIN EN ISO 2433) : 45 s ; la composition SF1 est toujours stable après 60 jours de stockage, et l'évolution dans le temps de la viscosité est inférieure à 20 %.
- La détermination de la taille des particules par diffraction de la lumière à l'aide du granulomètre laser Mastersizer montre que l'on obtient un pic principal en d50 centré sur un diamètre moyen compris entre 5 et 6 $\mu$m et un d90 de 19 $\mu$m, ce qui confirme la mise en suspension de la totalité de la poudre.

**EXEMPLE** 2 : **Composition aqueuse de semi-fini selon l'invention (SF2)** :

**Préparation d'une composition aqueuse de semi-fini SF2 à base de polymère hétérocyclique, sans amine, et avec du solvant aprotique polaire non étiqueté.**

On réalise une composition aqueuse de semi-fini SF2 comportant les composés suivants, leurs quantités respectives étant indiquées ci-dessous :

| - Polyamide-acide amique (35,5 % ES) | : 616,0 g |
|---|---|
| - N-formylmorpholine | : 130,0 g |
| - Eau déminéralisée | : 596,3 g |
| - TOTAL | : 1342,3 g |

Pour réaliser la composition aqueuse de semi-fini SF2, on procède de la même manière que dans l'exemple 1.

Le taux de solvant aprotique polaire toxique dans la composition SF2, soit la NMP, est inférieur à 2,3 % en poids par rapport au poids total de la composition.

Les propriétés de la composition aqueuse SF2 ainsi obtenue sont les suivantes :

- extrait sec théorique : 16,3 %
- extrait sec mesuré dans la composition : 16,2 %
- Il s'agit d'une suspension de couleur blanc crème.
- Le pH de cette composition est compris entre 3 et 4.
- Viscosité (en coupe 2,5 selon la norme DIN EN ISO 2433) : 50 s ; la composition SF2 est toujours stable après 60 jours de stockage, et l'évolution de la viscosité dans la durée est inférieure à 20 %,
- La détermination de la taille des particules par diffraction de la lumière à l'aide du granulomètre laser Mastersizer montre que l'on obtient un pic principal en d50 centré sur un diamètre moyen comprise entre 5 et 6 $\mu$m et un d90 de 19 $\mu$m, ce qui confirme la mise en suspension de la totalité de la poudre.

**EXEMPLE 3 : Composition aqueuse de semi-fini selon l'invention (SF3) :**

**Préparation d'une composition aqueuse de semi-fini selon l'invention SF3 à base de polymère hétérocyclique, sans amine, et avec du solvant aprotique polaire étiqueté.**

On réalise une composition aqueuse de semi-fini SF3 comportant les composés suivants, leurs quantités respectives étant indiquées ci-après :

| - Polyamide-acide amique (35,5 % ES) | : 616,0 g |
|---|---|
| - N-éthylpyrrolidone | : 142,0 g |
| - Eau déminéralisée | : 584,0 g |
| - TOTAL | : 1342,0 g |

Pour réaliser la composition aqueuse de semi-fini SF3, on procède de la même manière que dans l'exemple 1.

Les propriétés de la composition aqueuse SF3 ainsi obtenue sont les suivantes :

- **-** extrait sec théorique : 16,3 %
- **-** extrait sec mesuré dans la composition : 16,2 %
- **-** Il s'agit d'une suspension de couleur blanc crème.
- **-** Le pH de cette composition est compris entre 3 et 4.
- **-** Viscosité (en coupe 2,5 selon la norme DIN EN ISO 2433) : 50 s ; la composition SF3 est toujours stable après 60 jours de stockage, et l'évolution de la viscosité dans le temps est inférieure à 20 %,
- **-** La détermination de la taille des particules par diffraction de la lumière à l'aide du granulomètre laser Mastersizer montre que l'on obtient un pic principal en d50 centré sur un diamètre moyen de 5 à 6 $\mu$m et un d90 de 19 $\mu$m, ce qui confirme la mise en suspension de la totalité de la poudre.

### EXEMPLE 4 : Composition aqueuse de semi-fini selon l'invention (SF4) :

**Préparation d'une composition aqueuse de semi-fini SF4 à base de polymère hétérocyclique, sans amine, et avec du solvant aprotique polaire non étiqueté.**

On réalise une composition aqueuse de semi-fini SF4 comportant les composés suivants, leurs quantités respectives étant indiquées ci-dessous :

| | |
|---|---|
| - Polyamide-acide amique (90 % ES) | : 131,3 g |
| - N-formylmorpholine | : 68,0 g |
| - Eau déminéralisée | : 485,0 g |
| - TOTAL | : 684,3 g |

Pour réaliser la composition aqueuse de semi-fini SF4, on procède de la même manière que dans l'exemple 1.

Le taux de solvant aprotique polaire toxique dans la composition SF4, soit la NMP, est inférieur à 1 % en poids par rapport au poids total de la composition.

Les propriétés de la composition aqueuse SF4 ainsi obtenue sont les suivantes :

- **-** extrait sec théorique : 17,3 %
- **-** extrait sec mesuré dans la composition : 18,0 %
- **-** Il s'agit d'une suspension de couleur blanc crème.
- **-** Le pH de cette composition est compris entre 3 et 4.
- **-** Viscosité (en coupe 2,5 selon la norme DIN EN ISO 2433) : 59 s ; la composition SF4 est toujours stable après 60 jours de stockage, et l'évolution de la viscosité dans la durée est inférieure à 20 %,
- **-** La détermination de la taille des particules par diffraction de la lumière à l'aide du granulomètre laser Mastersizer montre que l'on obtient un pic principal en d50 centré sur un diamètre moyen comprise entre 5 et 6 $\mu$m et un d90 de 19 $\mu$m, ce qui confirme la mise en suspension de la totalité de la poudre.

### EXEMPLE COMPARATIF 1 : Composition aqueuse de semi-fini (SFC1) :

**Préparation d'une composition aqueuse de semi-fini SFC1 à base de polymère hétérocyclique avec une amine et du solvant aprotique polaire étiqueté.**

On réalise une composition aqueuse de semi-fini SFC1 comportant les composés suivants, leurs quantités respectives étant indiquées ci-après :

| | |
|---|---|
| - Résine PAI à 29 % d'extrait sec dans NEP | : 327,9 g |
| - N-éthylpyrrolidone | : 117,7 g |
| - Triéthylamine | : 32,8 g |
| - Eau déminéralisée | : 521,6 g |
| - TOTAL | : 1000,0 g |

La mise en solution de la PAI comporte une étape de passage en phase aqueuse via l'obtention d'un sel de polyamide-acide amique. Cette étape est réalisée dans un broyeur à billes de marque Discontimill®, à température ambiante en présence d'amine.

Dans la composition SFC1, le rapport pondéral eau/amine est d'environ 94/6. Le pourcentage pondéral d'amine dans la composition SFC1 est de 3,3 %.

Le rapport pondéral polyamide-imide/amine est d'environ 74/26. Le taux de solvant aprotique polaire dans la composition SFC1 est de 35,0 % en poids par rapport au poids total de la composition SFC1.

Les propriétés de la composition aqueuse SFC1 ainsi obtenue sont les suivantes :

- extrait sec théorique : 9,5 %
- extrait sec mesuré dans la composition : 9,3 %
- Il s'agit d'une solution de couleur jaune translucide et très visqueuse.
- Viscosité (en coupe 4 selon la norme DIN EN ISO 2433/ASTM D5125) : 130 s.
- La détermination de la taille des particules par diffraction de la lumière à l'aide du granulomètre laser Mastersizer montre que la taille des particules est très inférieure 1 $\mu$m, ce qui confirme la mise en émulsion de la totalité de la résine polyamide-imide.

**EXEMPLE COMPARATIF 2 : Composition aqueuse de semi-fini (SFC2) :**

**Préparation d'une composition aqueuse de semi-fini SFC2 à base de polymère hétérocyclique dont le d90 est supérieur à 40 $\mu$m, sans solvant aprotique polaire ni amine.**

On réalise une composition aqueuse de semi-fini SFC2 comportant les composés suivants, leurs quantités respectives étant indiquées ci-dessous :

| | |
|---|---|
| - Polyamide-acide amique (35,5 % ES) | : 458,9 g |
| - Eau déminéralisée | : 541,1 g |
| - TOTAL | : 1000,0 g |

Pour réaliser la composition aqueuse de semi-fini SFC2, on procède de la même manière que dans l'exemple 1 selon l'invention.

Les propriétés de la composition aqueuse SFC2 ainsi obtenue sont les suivantes :

- extrait sec théorique : 16,3 %

- extrait sec mesuré dans la composition : 16,2 %

- Il s'agit d'une suspension de couleur blanc crème.

- Le pH de cette composition est compris entre 3 et 4.

- La composition SFC2 décante en une journée.

- La détermination de la taille des particules par diffraction de la lumière à l'aide du granulomètre laser Mastersizer montre que l'on obtient un pic principal en d50 centré sur un diamètre moyen d'environ 20 $\mu$m et un d90 d'environ 48 $\mu$m.

**EXEMPLE COMPARATIF 3 : Composition aqueuse de semi-fini (SFC3) :**

**Préparation d'une composition aqueuse de semi-fini SFC3 à base de polymère hétérocyclique, sans solvant aprotique polaire et avec une amine.**

On réalise une composition aqueuse de semi-fini SFC3 comportant les composés suivants, leurs quantités respectives étant indiquées ci-dessous :

- Polyamide-acide amique (35,5 % ES)     : 149,0 g

EP 3 158 018 B1

<p style="text-align:center">(suite)</p>

| | |
|---|---|
| - Triéthylamine | : 26,0 g |
| - Eau déminéralisée | : 710,0 g |
| - TOTAL | : 885,0 g |

Pour réaliser la composition aqueuse de semi-fini SFC3, on procède comme suit :

- on introduit dans un réacteur l'eau, la poudre de polyamide-acide amique et l'amine ;
- le mélange obtenu est mis sous agitation, puis chauffé à une température comprise entre 50 et 85°C ;
- le rapport pondéral eau/amine est d'environ 97/3. Le pourcentage pondéral d'amine dans la composition SFC3 est de 2,9 %. Le taux de solvant aprotique polaire dans la composition SFC3 est inférieur à 1 % en poids par rapport au poids total de la composition.

Les propriétés de la composition aqueuse SFC3 ainsi obtenue sont les suivantes :

- extrait sec théorique : 6,0 %
- extrait sec mesuré dans la composition : 6,1 %
- Il s'agit d'une émulsion très fluide et de couleur blanche opalescente.
- Le pH de la composition est compris entre 10 et 11.
- Viscosité (en coupe 2,5 selon la norme DIN EN ISO 2433/ASTM D5125) : 50 s ; après mise en vieillissement à 40°C, la composition de semi-fini SFC3 est toujours stable après 60 jours de stockage, et l'évolution de la viscosité dans le temps est inférieure à 20 %.
- La détermination de la taille des particules par diffraction de la lumière à l'aide du granulomètre laser Mastersizer montre que la taille des particules est très inférieure 1 $\mu$m, ce qui confirme la mise en émulsion de la totalité de la résine polyamide-acide amique.

**EXEMPLE 5 : Composition aqueuse de primaire selon l'invention (P1) :**

**Préparation d'une composition aqueuse de primaire selon l'invention P1 à partir de la composition de semi-fini SF1 de l'exemple 1.**

On réalise une composition aqueuse de primaire P1 d'accrochage comportant les composés suivants, leurs quantités respectives étant indiquées ci-dessous :

| | |
|---|---|
| - Dispersion PTFE | : 33,3 g |
| - Dispersion de noir de carbone | : 3,8 g |
| - Composition de semi-fini SF1 (16,3 % d'extrait sec) | : 30,0 g |
| - N-formylmorpholine | : 9,9 g |
| - Système tensioactif non-ionique | : 5,6 g |
| - Silice colloïdale | : 12,0 g |
| - $NH_4OH$ | : 0,8 g |
| - Eau déminéralisée | : 4,6 g |
| - Total | : 100,0 g |

En ce qui concerne le solvant aprotique polaire non toxique dans la composition P1, la teneur en NFM est de 9,9 % en poids par rapport au poids total de la composition P1.

En ce qui concerne le solvant aprotique polaire toxique dans la composition P1, la teneur en NMP est inférieure à 0,7 % en poids par rapport au poids total de la composition P1 ; la NMP provient de la composition de semi-fini SF1.

Le taux de résine fluorée dans la composition de primaire P1 sèche est de l'ordre de 66,3 % en poids par rapport au poids total sec de la composition P1. La teneur relative en poids de polyamide-acide amique /PTFE est d'environ 20:80.

Les propriétés de la composition de primaire P1 ainsi obtenue sont :

- extrait sec théorique dans la composition : 30,1 %

- viscosité (en coupe 2,5 selon la norme DIN EN ISO 2433/ASTM D5125) : 48 s

**EXEMPLE 6 : Composition aqueuse de primaire selon l'invention (P2) :**

**Préparation d'une composition aqueuse de primaire selon l'invention P2 à partir de la composition aqueuse de semi-fini SF2 de l'exemple 2.**

On réalise une composition aqueuse de primaire P2 d'accrochage comportant les composés suivants, leurs quantités respectives étant indiquées ci-dessous :

| | |
|---|---|
| - Dispersion de PTFE | : 36,1 g |
| - Dispersion de noir de carbone | : 4,1 g |
| - Composition de semi-fini SF2 (16,3 % d'extrait sec) | : 34,1 g |
| - Système tensioactif non-ionique | : 6,0 g |
| - Silice colloïdale | : 13,0 g |
| - $NH_4OH$ | : 0,8 g |
| - Eau déminéralisée | : 5,9 g |
| - Total | : 100,0 g |

En ce qui concerne le solvant aprotique polaire non étiqueté dans la composition P2, la teneur en NFM est de 3,3 % en poids par rapport au poids total de la composition P2 ; la NFM provient de la composition de semi-fini SF2.

En ce qui concerne le solvant aprotique polaire étiqueté dans la composition P2, la teneur en NMP est inférieure à 0,8 % en poids par rapport au poids total de la composition P2 ; la NMP provient de la composition de semi-fini SF2.

Le taux de résine fluorée dans la composition de primaire P2 sèche est de l'ordre de 66,6 % en poids par rapport au poids total sec de la composition P2. La teneur relative en poids de polyamide-acide amique /PTFE est d'environ 20:80.

Les propriétés de la composition de primaire P2 ainsi obtenue sont les suivantes :

- extrait sec théorique dans la composition : 32,9 %
- viscosité (en coupe 2,5 selon la norme DIN EN ISO 2433/ASTM D5125) : 51 s

**EXEMPLE 7 : Composition aqueuse de primaire selon l'invention (P3) :**

**Préparation d'une composition aqueuse de primaire selon l'invention P3 à partir de la composition de semi-fini SF3 de l'exemple 3.**

On réalise une composition aqueuse de primaire P3 d'accrochage comportant les composés suivants, leurs quantités respectives étant indiquées ci-après :

| | |
|---|---|
| - Dispersion de PTFE | : 33,2 g |
| - Dispersion de noir de carbone | : 3,8 g |
| - Composition de semi-fini SF3 (16,3 % d'extrait sec) | : 29,1 g |
| - Diméthylsulfoxyde | : 10,1 g |
| - Système tensioactif non-ionique | : 5,6 g |
| - Silice colloïdale | : 11,9 g |
| - $NH_4OH$ | : 0,8 g |
| - Eau déminéralisée | : 5,5 g |
| - Total | : 100,0 g |

En ce qui concerne le solvant aprotique polaire non étiqueté dans la composition P3, la teneur en DMSO est de 10,1 % en poids par rapport au poids total de la composition P3.

En ce qui concerne les solvants aprotiques polaires étiquetés dans la composition P3, la teneur en NMP est inférieure à 0,7 % en poids et la teneur en NEP est de 3,1 % en poids par rapport au poids total de la composition P3 ; la NMP et la NEP proviennent de la composition de semi-fini SF3.

Le taux de résine fluorée dans la composition de primaire P3 sèche est de l'ordre de 66,6 % en poids par rapport au poids total sec de la composition P3. La teneur relative en poids de polyamide-acide amique /PTFE est d'environ 20:80.

Les propriétés de la composition de primaire P3 ainsi obtenue sont les suivantes :

- extrait sec théorique dans la composition : 30,0 %
- viscosité (en coupe 2,5 selon la norme DIN EN ISO 2433/ASTM D5125) : 49 s

**EXEMPLE 8 : Composition aqueuse de primaire selon l'invention (P4) :**

**Préparation d'une composition aqueuse de primaire selon l'invention P4 à partir de la composition de semi-fini SF2 de l'exemple 2 et d'une composition de semi-fini comprenant de la PES.**

On réalise tout d'abord une composition aqueuse de semi-fini à base de PES comportant les composés suivants, leurs quantités respectives étant indiquées ci-après :

| | |
|---|---|
| - Polyéthersulfone (100 % d'extrait sec) | : 119,1 g |
| - Eau déminéralisée | : 625,0 g |
| - TOTAL | : 744,1 g |

Pour réaliser la composition aqueuse de semi-fini à base de PES, on utilise une poudre initiale de polyéthersulfone dont la granulométrie varie de 20 μm à 10 mm, et plus particulièrement un d90 compris entre 40 et 60 μm et un d50 compris entre 20 et 40 μm.

La mise en suspension de la PES comprend une étape de broyage, le broyage étant réalisé dans un broyeur à billes de marque Discontimill®, à température ambiante pour réduire la taille des particules de PES.

On procède comme suit :

- on introduit la poudre de polyéthersulfone dans le broyeur ; puis
- on ajoute l'eau déminéralisée dans le broyeur ; et enfin
- on procède à l'étape de broyage.

Les propriétés de la composition aqueuse à base de PES ainsi obtenue sont les suivantes :

- extrait sec théorique : 16,0 %
- extrait sec mesuré dans la composition : 16,2 %
- Il s'agit d'une suspension de couleur blanche opaque.
- Le pH de cette composition est compris entre 6 et 7.
- Viscosité (en coupe 4 selon la norme DIN EN ISO 2433/ASTM D5125) > 30 s : après mise en vieillissement à 40°C, la composition à base de PES est toujours stable après 60 jours de stockage, et l'évolution dans le temps de la viscosité est inférieure à 20 %.
- La détermination de la taille des particules par diffraction de la lumière à l'aide du granulomètre laser Mastersizer montre que l'on obtient un pic principal en d50 centré sur un diamètre moyen de 5 à 6 μm et un d90 de 19 μm, ce qui confirme la mise en suspension de la totalité de la poudre.

On réalise ensuite une composition aqueuse de primaire P4 d'accrochage comportant les composés suivants, leurs quantités respectives étant indiquées ci-après :

| | |
|---|---|
| - Dispersion de PTFE | : 37,6 g |
| - Dispersion de noir de carbone | : 2,8 g |
| - Composition de semi-fini SF2 (16,3 % d'extrait sec) | : 21,9 g |
| - Composition de semi-fini à base de PES (16,0 % d'extrait sec) | : 12,5 g |
| - N-formylmorpholine | : 7,2 g |
| - Système tensioactif non-ionique | : 4,2 g |
| - Silice colloïdale | : 9,0 g |
| - NH$_4$OH | : 0,5 g |
| - Eau déminéralisée | : 4,3 g |

(suite)

| | |
|---|---|
| - Total | : 100,0 g |

Le rapport pondéral polyamide-acide amique/polyéthersulfone est d'environ 64/36.

En ce qui concerne le solvant aprotique polaire non étiqueté dans la composition P4, la teneur en NFM est de 9,3 % en poids par rapport au poids total de la composition P4.

En ce qui concerne les solvants aprotiques polaires étiquetés dans la composition P4, la teneur en NMP est inférieure à 0,5 % en poids par rapport au poids total de la composition P4 ; la NMP provient de la composition de semi-fini SF2.

Le taux de résine fluorée dans la composition de primaire P4 sèche est de l'ordre de 70 % en poids par rapport au poids total sec de la composition P4. La teneur relative en poids de polyamide-acide amique et de polyéthersulfone/PTFE est d'environ 20:80.

Les propriétés de la composition de primaire P4 ainsi obtenue sont les suivantes :

- extrait sec théorique dans la composition : 32,1 %
- viscosité (en coupe 2,5 selon la norme DIN EN ISO 2433/ASTM D5125) : 49 s

### EXEMPLE 9 : Composition aqueuse de primaire selon l'invention (P5) :

**Préparation d'une composition aqueuse de primaire selon l'invention P5 à partir de la composition de semi-fini SF4 de l'exemple 4.**

On réalise une composition aqueuse de primaire P5 d'accrochage comportant les composés suivants, leurs quantités respectives étant indiquées ci-dessous :

| | |
|---|---|
| - Dispersion PTFE | : 33,3 g |
| - Dispersion de noir de carbone | : 3,8 g |
| - Composition de semi-fini SF4 (17,3 % d'extrait sec) | : 28,5 g |
| - N-formylmorpholine | : 9,9 g |
| - Système tensioactif non-ionique | : 5,6 g |
| - Silice colloïdale | : 12,0 g |
| - $NH_4OH$ | : 1,6 g |
| - Eau déminéralisée | : 5,3 g |
| - Total | : 100,0 g |

En ce qui concerne le solvant aprotique polaire non toxique dans la composition P5, la teneur en NFM est de 12,7 % en poids par rapport au poids total de la composition P5.

En ce qui concerne le solvant aprotique polaire toxique dans la composition P5, la teneur en NMP est inférieure à 0,3 % en poids par rapport au poids total de la composition P5 ; la NMP provient de la composition de semi-fini SF4.

Le taux de résine fluorée dans la composition de primaire P5 sèche est de l'ordre de 66,2 % en poids par rapport au poids total sec de la composition P5. La teneur relative en poids de polyamide-acide amique /PTFE est d'environ 20:80.

Les propriétés de la composition de primaire P5 ainsi obtenue sont les suivantes :

- extrait sec théorique dans la composition : 30,2 %
- viscosité (en coupe 2,5 selon la norme DIN EN ISO 2433/ASTM D5125) : 58 s

### EXEMPLE COMPARATIF 4 : Composition aqueuse de primaire (PC1) :

**Préparation d'une composition aqueuse de primaire PC1 à partir de la composition de semi-fini SFC1 de l'exemple comparatif 1.**

On réalise une composition aqueuse de primaire PC1 d'accrochage comportant les composés suivants, leurs quantités respectives étant indiquées ci-après :

| | |
|---|---|
| - Dispersion PTFE | : 30,5 g |
| - Dispersion de noir de carbone | : 3,5 g |
| - Composition de semi-fini SFC1 (9,5 % d'extrait sec) | : 47,2 g |
| - Système tensioactif non-ionique | : 5,1 g |
| - Silice colloïdale | : 11,0 g |
| - $NH_4OH$ | : 1,4 g |
| - Eau déminéralisée | : 1,3 g |
| - Total | : 100,0 g |

Le taux d'amine dans la composition de primaire PC1 de 1,5 % en poids par rapport au poids total de la composition PC1 ; l'amine provient de la composition de semi-fini SFC1.

En ce qui concerne le solvant aprotique polaire étiqueté dans la composition PC1, la teneur en NEP est de 16,5 % en poids par rapport au poids total de la composition PC1 ; la NEP provient de la composition de semi-fini SFC1.

Le taux de résine fluorée dans la composition de primaire PC1 sèche est de l'ordre de 66,6 % en poids par rapport au poids total sec de la composition PC1. La teneur relative en poids de polyamide-acide amique /PTFE est d'environ 20:80.

Les propriétés de la composition de primaire PC1 ainsi obtenue sont les suivantes :

- extrait sec théorique dans la composition : 27,6 %
- viscosité (en coupe 2,5 selon la norme DIN EN ISO 2433/ASTM D5125) : 55 s

## EXEMPLE COMPARATIF 5 : Composition aqueuse de primaire (PC2) :

**Préparation d'une composition aqueuse de primaire PC2 à partir de la composition de semi-fini SFC2 de l'exemple comparatif 2.**

On réalise une composition aqueuse de primaire PC2 d'accrochage comportant les composés suivants, leurs quantités respectives étant indiquées ci-dessous :

| | |
|---|---|
| - Dispersion PTFE | : 36,9 g |
| - Dispersion de noir de carbone | : 4,2 g |
| - Composition de semi-fini SFC2 (16,3 % d'extrait sec) | : 33,6 g |
| - N-éthylpyrrolidone | : 2,6 g |
| - Système tensioactif non-ionique | : 6,2 g |
| - Silice colloïdale | : 13,3 g |
| - $NH_4OH$ | : 1,7 g |
| - Eau déminéralisée | : 1,5 g |
| - Total | : 100,0 g |

En ce qui concerne les solvants aprotiques polaires étiquetés dans la composition PC2, la teneur en NMP est inférieure à 0,8 % en poids et la teneur en NEP est de 2,6 % en poids par rapport au poids total de la composition PC2 ; la NMP provient de la composition de semi-fini SFC2.

Le taux de résine fluorée dans la composition de primaire PC2 sèche est de l'ordre de 66,6 % en poids par rapport au poids total sec de la composition PC2. La teneur relative en poids de polyamide-acide amique /PTFE est d'environ 20:80.

Les propriétés de la composition de primaire PC2 ainsi obtenue sont les suivantes :

- extrait sec théorique dans la composition : 33,5 %
- viscosité (en coupe 2,5 selon la norme DIN EN ISO 2433/ASTM D5125) : 55 s

**EXEMPLE COMPARATIF 6 : Composition aqueuse de primaire (PC3) :**

**Préparation d'une composition aqueuse de primaire PC3 à partir de la composition de semi-fini SF1 de l'exemple 1.**

On réalise une composition aqueuse de primaire PC3 d'accrochage comportant les composés suivants, leurs quantités respectives étant indiquées ci-dessous :

| | |
|---|---|
| - Dispersion de PTFE | : 37,5 g |
| - Dispersion de noir de carbone | : 4,3 g |
| - Composition de semi-fini SF1 (16,3 % d'extrait sec) | : 34,1 g |
| - Système tensioactif non-ionique | : 6,3 g |
| - Silice colloïdale | : 13,5 g |
| - NH$_4$OH | : 1,8 g |
| - Eau déminéralisée | : 2,5 g |
| - Total | : 100,0 g |

En ce qui concerne le solvant aprotique polaire étiqueté dans la composition PC3, la teneur en NMP est inférieure à 0,8 % en poids par rapport au poids total de la composition PC3 ; la NMP provient de la composition de semi-fini SF1.

Le taux de résine fluorée dans la composition de primaire PC3 sèche est de l'ordre de 66,6 % en poids par rapport au poids total sec de la composition PC3. La teneur relative en poids de polyamide-acide amique /PTFE est d'environ 20:80.

Les propriétés de la composition de primaire PC3 ainsi obtenue sont les suivantes :

- extrait sec théorique dans la composition : 34,0 %
- viscosité (en coupe 2,5 selon la norme DIN EN ISO 2433/ASTM D5125) : 51 s

**EXEMPLE COMPARATIF 7 : Composition aqueuse de primaire (PC4) :**

**Préparation d'une composition aqueuse de primaire PC4 à partir de la composition de semi-fini SFC3 de l'exemple comparatif 3.**

On réalise une composition aqueuse de primaire PC4 d'accrochage comportant les composés suivants, leurs quantités respectives étant indiquées ci-dessous :

| | |
|---|---|
| - Dispersion PTFE | : 23,6 g |
| - Dispersion de noir de carbone | : 2,7 g |
| - Composition de semi-fini SFC3 (6 % d'extrait sec) | : 59,2 g |
| - Système tensioactif non-ionique | : 4,0 g |
| - Silice colloïdale | : 8,5 g |
| - NH$_4$OH | : 1,2 g |
| - Eau déminéralisée | : 0,8 g |
| - Total | : 100,0 g |

Le taux d'amine dans la composition de primaire PC4 est de 1,7 % en poids par rapport au poids total de la composition PC4 ; l'amine provient de la composition de semi-fini SFC3.

En ce qui concerne le solvant aprotique polaire étiqueté dans la composition PC4, la teneur en NMP est inférieure à 0,5 % en poids par rapport au poids total de la composition PC4 ; la NMP provient de la composition de semi-fini SFC3.

Le taux de résine fluorée dans la composition de primaire PC4 sèche est de l'ordre de 66,6 % en poids par rapport au poids total sec de la composition PC4. La teneur relative en poids de polyamide-acide amique /PTFE est d'environ 20:80.

Les propriétés de la composition de primaire PC4 ainsi obtenue sont les suivantes :

- extrait sec théorique dans la composition : 21,4 %
- viscosité (en coupe 2,5 selon la norme DIN EN ISO 2433/ASTM D5125) : 41 s

RESULTATS DES TESTS REALISES

Les compositions aqueuses de semi-fini et de primaire précédemment décrites sont listées dans le tableau 1 ci-après. Les revêtements obtenus à partir de ces différentes compositions sont soumis aux tests d'adhérence du primaire sur le substrat et au test de coloration.

La coloration du revêtement appréciée visuellement permet de valider que les formules réalisées selon l'invention présente des jaunissements nuls à faibles acceptables en comparaison avec les formulations traditionnelles incorporant des aminés.

L'adhérence du revêtement est assurée lorsque la taille de la poudre est conforme à l'invention.

Tableau 1

| | Composition de semi-fini | SF1 | SF2 | SF3 | SF2 + SF à base de PES | SF4 | SFC1 | SFC2 | SF1 | SFC3 |
|---|---|---|---|---|---|---|---|---|---|---|
| **SEMI-FINI** | Exemple | Ex.1 | Ex.2 | Ex.3 | - | Ex.4 | Ex.Comp.1 | Ex.Comp.2 | Ex.1 | Ex.Comp.3 |
| | Type de résine | PAI poudre | PAI poudre | PAI poudre | PAI poudre + PES poudre | PAI poudre | PAI solvant | PAI poudre | PAI poudre | PAI poudre |
| | Type d'amine | 0 | 0 | 0 | 0 | 0 | TEA=3,3 % | 0 | 0 | TEA=2,9 % |
| | Taille des particules de résine | d90<20$\mu$m d50<10$\mu$m | d90<20$\mu$m d50<10$\mu$m | d90<20$\mu$m d50<10$\mu$m | d90<20$\mu$m d50<10$\mu$m | d90<20$\mu$m d50<10$\mu$m | émulsion | d90>20$\mu$m d50>10$\mu$m | d90<20$\mu$m d50<10$\mu$m | émulsion |
| | Solvant aprotique polaire | NMP<2,3 % | NMP<2,3 % NFM=9,7 % | NMP<2,3 % NEP=10,6 % | dans SF2 NMP<2,3 % NFM=9,7 % | NMP<1 % NFM=9,9 % | NEP=35 % | NMP<2,3 % | NMP<2,3 % | NMP<1 % |
| | Composition de primaire | P1 | P2 | P3 | P4 | P5 | PC1 | PC2 | PC3 | PC4 |
| **PRIMAIRE** | Exemple | Ex.5 | Ex.6 | Ex.7 | Ex.8 | Ex.9 | Ex.Comp.4 | Ex.Comp 5 | Ex.Comp.6 | Ex.Comp.7 |
| | Solvant aprotique polaire non étiqueté | NFM=9,9 % | NFM=3,3 % | DMSO=10,1 % | NFM=9,3 % | NFM=12,7 % | 0 | 0 | 0 | 0 |
| | Solvant aprotique polaire étiqueté | NMP<0,7 % | NMP<0,8 % | NMP<0,7 % NEP=3,1 % | NMP<0,5 % | NMP<0,3 % | NEP=16,5 % | NMP<0,8 % NEP=2,6 % | NMP<0,8 % | NMP<0,5 % |
| **TE STS** | Coloration du revêtement | FAIBLE | FAIBLE | FAIBLE | TRES FAIBLE | FAIBLE | Fort jaunissement non acceptable | FAIBLE | FAIBLE | Fort jaunissement non acceptable |
| | Test d'adhérence sur substrat Alu lisse | Excellente | Excellente | Bonne | Excellente | Excellente | Excellente | Mauvaise | Mauvaise | Excellente |

**Revendications**

1. Composition aqueuse pour revêtement exempte d'amines et comprenant au moins un polymère hétérocyclique, **caractérisée en ce que** le polymère hétérocyclique se présente sous forme de poudre ayant un d90 inférieur ou égal à 20 μm et est sélectionné dans le groupe des polyamide-acide amiques.

2. Composition pour revêtement selon la revendication 1, **caractérisée en ce qu'**elle comprend au plus 15 % en poids de solvant par rapport au poids total de la composition pour revêtement.

3. Composition pour revêtement selon l'une quelconque des revendications précédentes, comprenant en outre au moins un polymère aromatique dont l'indice d'acide est égal à 0 mg de KOH/g et qui se présente sous forme de poudre ayant un d90 inférieur ou égal à 20 μm a teneur relative en poids du polymère hétérocyclique par rapport au polymère aromatique dans la composition pour revêtement étant supérieure à 50:50 et inférieure à 100:0.

4. Composition pour revêtement selon la revendication 3, dans laquelle ledit polymère aromatique est sélectionné dans le groupe comprenant les polyéthersulfones (PES), les polyétheréthersulfones (PEES), les polyphénylesulfones (PPSU), les polysulfures de phénylène (PPS), les polyétheréthercétones (PEEK), les polyéthercétones (PEK), les polyéthercétonecétones (PEKK), les polyétheréthercétonecétones (PEEKK), les polyéthercétoneéthercétonecétones (PEKEKK) et les dérivés et mélanges de ceux-ci.

5. Composition aqueuse de revêtement antiadhésif exempte d'amine, **caractérisée en ce qu'**elle comprend une composition aqueuse pour revêtement selon l'une quelconque des revendications précédentes et au moins une résine fluorocarbonée.

6. Composition de revêtement antiadhésif selon la revendication 5, comprenant entre 2 et 20 % en poids de solvant par rapport au poids total de la composition de revêtement antiadhésif.

7. Composition de revêtement antiadhésif selon l'une quelconque des revendications 5 et 6, **caractérisée en ce qu'**elle comprend au plus 1 % en poids de solvant aprotique polaire toxique par rapport au poids total de la composition de revêtement antiadhésif.

8. Procédé de préparation d'une composition aqueuse pour revêtement exempte d'amine selon l'une des quelconque des revendications 1 à 4, **caractérisé en ce que** le procédé comprend les étapes suivantes :

   a) la fourniture d'au moins un polymère hétérocyclique sélectionné dans le groupe des polyamide-acide amiques sous forme de poudre,
   b) la préparation d'un mélange comprenant de l'eau et la poudre de l'étape a), et
   c) le broyage du mélange issu de l'étape b) pour obtenir un mélange broyé comprenant le polymère hétérocyclique sous forme de poudre ayant un d90 inférieur ou égal à 20 μm.

9. Procédé de préparation d'une composition aqueuse de revêtement antiadhésif exempte d'amine selon l'une des quelconque des revendications 5 à 7, **caractérisé en ce que** le procédé comprend le mélange de la composition aqueuse pour revêtement selon l'une quelconque des revendications 1 à 4 ou telle que préparée selon le procédé de la revendication 8, avec une résine fluorocarbonée.

**Patentansprüche**

1. Wässrige Zusammensetzung für eine aminfreie Beschichtung und mindestens ein heterocyclisches Polymer umfassend,
**dadurch gekennzeichnet, dass** das heterocyclische Polymer in Form eines Pulvers vorliegt, das einen $d_{90}$ kleiner oder gleich 20 μm aufweist, und aus der Gruppe der Polyamid-Amidsäuren ausgewählt ist.

2. Zusammensetzung für eine Beschichtung nach Anspruch 1, **dadurch gekennzeichnet, dass** sie in Bezug auf das Gesamtgewicht der Zusammensetzung für eine Beschichtung höchstens 15 Gew.-% Lösemittel umfasst.

3. Zusammensetzung für eine Beschichtung nach einem der vorstehenden Ansprüche, weiter mindestens ein aromatisches Polymer umfassend, dessen Säurezahl gleich 0 mg KOH/g ist und das in Form eines Pulvers vorliegt, das

einen $d_{90}$ kleiner oder gleich 20 μm aufweist, wobei der relative Gewichtsgehalt des heterocyclischen Polymers in Bezug auf das aromatische Polymer in der Zusammensetzung für eine Beschichtung größer als 50:50 und kleiner als 100:0 ist.

4. Zusammensetzung für eine Beschichtung nach Anspruch 3, wobei das aromatische Polymer aus der Gruppe ausgewählt ist, die die Polyethersulfone (PES), die Polyetherethersulfone (PEES), die Polyphenylsulfone (PPSU), die Polyphenylensulfide (PPS), die Polyetheretherketone (PEEK), die Polyetherketone (PEK), die Polyetherketonketone (PEKK), die Polyetheretherketonketone (PEEKK), die Polyetherketonetherketonketone (PEKEKK) und die Derivate und Gemische dieser umfasst.

5. Wässrige Zusammensetzung einer aminfreien Antihaftbeschichtung, **dadurch gekennzeichnet, dass** sie eine wässrige Zusammensetzung für eine Beschichtung nach einem der vorstehenden Ansprüche und mindestens ein Fluorkohlenstoffharz umfasst.

6. Zusammensetzung einer Antihaftbeschichtung nach Anspruch 5, umfassend zwischen 2 und 20 Gew.-% Lösemittel in Bezug auf das Gesamtgewicht der Zusammensetzung einer Antihaftbeschichtung.

7. Zusammensetzung einer Antihaftbeschichtung nach einem der Ansprüche 5 und 6, **dadurch gekennzeichnet, dass** sie in Bezug auf das Gesamtgewicht der Zusammensetzung einer Antihaftbeschichtung höchstens 1 Gew.-% toxisches polares aprotisches Lösemittel umfasst.

8. Verfahren zur Herstellung einer wässrigen Zusammensetzung für eine aminfreie Beschichtung nach einem der Ansprüche 1 bis 4, **dadurch gekennzeichnet, dass** das Verfahren die folgenden Schritte umfasst:

> a) Bereitstellung mindestens eines heterocyclischen Polymers, das aus der Gruppe der Polyamid-Amidsäuren ausgewählt ist, in Form eines Pulvers,
> b) Herstellung eines Gemischs, das Wasser und das Pulver von Schritt a) umfasst, und
> c) Zerkleinerung des aus Schritt b) hervorgegangenen Gemischs, um ein zerkleinertes Gemisch zu erhalten, das das heterocyclische Polymer in Form eines Pulvers umfasst, das einen $d_{90}$ kleiner oder gleich 20 μm aufweist.

9. Verfahren zur Herstellung einer wässrigen Zusammensetzung einer aminfreien Antihaftbeschichtung nach einem der Ansprüche 5 bis 7, **dadurch gekennzeichnet, dass** das Verfahren das Mischen der wässrigen Zusammensetzung für eine Beschichtung nach einem der Ansprüche 1 bis 4 oder wie nach dem Verfahren von Anspruch 8 hergestellt mit einem Fluorkohlenstoffharz umfasst.

**Claims**

1. Aqueous composition for amine-free coating and comprising at least one heterocyclic polymer, **characterised in that** the heterocyclic polymer is in the form of powder having a $d_{90}$ of less than or equal to 20 μm and is selected from the polyamide-amic acid group.

2. Composition for coating according to claim 1, **characterised in that** it comprises no more than 15% by weight solvent with respect to the total weight of the composition for coating.

3. Composition for coating according to either one of the preceding claims, further comprising at least one aromatic polymer acid number of which is equal to 0 mg of KOH/g and which is in the form of powder having a d90 of less than or equal to 20 μm, the relative proportion by weight of the heterocyclic polymer with respect to the aromatic polymer in the composition for coating being greater than 50:50 and less than 100:0.

4. Composition for coating according to claim 3, wherein said aromatic polymer is selected from the group comprising polyethersulfones (PES), polyetherethersulfones (PEES), polyphenylsulfones (PPSU), phenylene polysulfides (PPS), polyetheretherketones (PEEK), polyetherketones (PEK), polyetherketoneketones (PEKK), polyetheretherketoneketones (PEEKK), polyetherketoneetherketoneketones (PEKEKK) and derivatives and mixtures thereof.

5. Aqueous amine-free non-stick coating composition, **characterised in that** it comprises an aqueous composition for coating according to any one of the preceding claims and at least one fluorocarbon resin.

6. Non-stick coating composition according to claim 5, comprising between 2 and 20% by weight solvent with respect to the total weight of the non-stick coating composition.

7. Non-stick coating composition according to either one of claims 5 and 6, **characterised in that** it comprises no more than 1% by weight toxic polar aprotic solvent with respect to the total weight of the non-stick coating composition.

8. Method for preparing an aqueous composition for an amine-free coating according to any one of claims 1 to 4, **characterised in that** the method comprises the following steps:

a) the supply of at least one heterocyclic polymer selected from the polyamide-amic acid group in powder form,
b) the preparation of a mixture comprising water and the powder of step a), and
c) the grinding of the mixture resulting from step b) in order to obtain a ground mixture comprising the heterocyclic polymer in powder form having a d90 of less than or equal to 20 $\mu$m.

9. Method for preparing an aqueous amine-free non-stick coating composition according to any one of claims 5 to 7, **characterised in that** the method comprises the mixing of the aqueous composition for coating according to any one of claims 1 to 4 or as prepared according to the method of claim 8, with a fluorocarbon resin.

**EP 3 158 018 B1**

## RÉFÉRENCES CITÉES DANS LA DESCRIPTION

**Documents brevets cités dans la description**

- EP 1103582 A1